# EUROPEAN PATENT APPLICATION

(11) **EP 3 886 376 A1**
(43) Date of publication of application: **29.09.2021**
(21) Application number: 19890293.4
(22) Date of filing: 16.01.2019
(51) Int. Cl.: H04L 12/715

(54) **CLOUD NETWORK TRANSMISSION ROUTING METHOD AND SYSTEM**

(30) Priority: 28.11.2018 CN 201811435777
(71) Applicant: Wangsu Science & Technology Co., Ltd., Shanghai 200030 (CN)
(72) Inventor: GUO, Zhihong, Shanghai 200030 (CN); LI, Qingrong, Shanghai 200030 (CN)
(74) Representative: De Arpe Tejero, Manuel
(86) International application number: PCT/CN2019/071877
(87) International publication number: WO 2020/107678

(57) **Abstract**

The present disclosure describes a cloud network transmission routing method and system, and relates to the field of network transmission technology. The method includes that: a data exchange system of a first subnet receives an updated BGP routing entry announced by a subject node server, where the BGP routing entry includes a network segment identifier of a subject network segment of the subject node server and a corresponding community attribute; the data exchange system of the first subnet sends the BGP routing entry to a data exchange system of a second subnet according to the community attribute included in the BGP routing entry; and the data exchange system of the second subnet forwards the BGP routing entry to a node server of the second subnet. The present disclosure may reduce the traffic consumption during the transmission of a BGP routing entry.

## Description

### FIELD OF DISCLOSURE

The present disclosure generally relates to the field of network transmission technology, more particularly, relates to a could network transmission routing method and system.

### BACKGROUND

With the rapid development of Internet business, there are more and more node servers in the network, and inter-node server communication becomes more frequent. When the node servers communicate with each other, data is often transmitted through the public network. This will increase the operating cost of enterprises. At the same time, because the network construction of the public network cannot meet the current business development, the public network traffic easily gets congested during peak traffic periods, thereby affecting business operations.

In order to avoid the above situation, a network architecture similar to a large enterprise structure may be applied to set up node servers and routes. That is, multiple branch routes are connected through a central route, and each branch route is then connected to multiple node servers. Each node server on a branch route may record its own network segment in a routing table, and announce the routing table to nearby node servers and the connected branch route. The branch route may send the routing table received from the subject node server to the central route, and other connected branch routes and node servers. The central route forwards the routing table received from the aforementioned branch route to the other branch routes. The other branch routes forward the routing table to each connected node server, respectively. A node server may add the routing table received from other node servers to its own routing table. In this way, the routing table of each node server in the network records the network segments of other node servers. Accordingly, data transmission may be routed from the subject node server to any other node server.

In the process of implementing the present disclosure, Applicants have found that the existing technologies have at least the following problems.

In the process of transmitting a routing table, since the network segment of the subject node server is to be sent to each node server in the network, a large amount of data traffic is required. At the same time, since the network segments of all node servers in the network may be acquired from the routing table of any node server, the security risk of data transmission between node servers is high.

### BRIEF SUMMARY OF THE DISCLOSURE

In order to solve the problems in the existing technologies, embodiments of the present disclosure provide a cloud network transmission routing method and system. The technical solutions are as follows.

In one aspect, a cloud network transmission routing method is provided. The method is applied to a BGP network. The BGP network may be divided into multiple subnets, where each subnet includes a data exchange system and a plurality of node servers. The data exchange system establishes a BGP session with each of the plurality of node servers. The method includes that:
the data exchange system of a first subnet receives an updated BGP routing entry announced by a subject node server, where the BGP routing entry includes a network segment identifier of a subject network segment of the subject node server and a corresponding community attribute;
the data exchange system of the first subnet sends the BGP routing entry to the data exchange system of a second subnet according to the community attribute included in the BGP routing entry; and
the data exchange system of the second subnet forwards the BGP routing entry to a node server of the second subnet.
Further, that the data exchange system of the first subnet receives the updated BGP routing entry announced by the subject node server includes that:
the data exchange system of the first subnet determines whether the community attribute included in the BGP routing entry conforms to a locally preset intra-subnet community attribute accepting rule; and
if the community attribute included in the BGP routing entry conforms to the locally preset intra-subnet community attribute accepting rule, the data exchange system of the first subnet accepts the updated BGP routing entry announced by the subject node server.

Further, that the data exchange system of the first subnet sends the BGP routing entry to the data exchange system of the second subnet according to the community attribute included in the BGP routing entry includes that:
the data exchange system of the first subnet determines a target inter-subnet community attribute sending rule, in a locally preset inter-subnet community attribute sending rule table, to which the community attribute included in the BGP routing entry conforms; and
the data exchange system of the first subnet determines a second subnet pointed to by the target inter-subnet community attribute sending rule, and sends the BGP routing entry to the data exchange system of the second subnet.

Further, that the data exchange system of the second subnet forwards the BGP routing entry to a node server of the second subnet includes that:
the data exchange system of the second subnet determines whether the community attribute included in the BGP routing entry conforms to a locally preset intra-subnet community attribute sending rule; and
if the community attribute included in the BGP routing entry conforms to the locally preset intra-subnet community attribute sending rule, the data exchange system of the second subnet forwards the BGP routing entry to the node server of the second subnet.

Further, that the data exchange system of the second subnet forwards the BGP routing entry to a node server of the second subnet includes that:
the data exchange system of the second subnet determines whether the community attribute included in the BGP routing entry conforms to an inter-subnet community attribute accepting rule in a locally preset inter-subnet community attribute accepting rule table; and
if the community attribute included in the BGP routing entry conforms to an inter-subnet community attribute accepting rule in the locally preset inter-subnet community attribute accepting rule table, the data exchange system of the second subnet sends the BGP routing entry to the node server of the second subnet.

Further, the method also includes that:
the data exchange system of the first subnet determines whether the community attribute included in the BGP routing entry conforms to a locally preset intra-subnet community attribute sending rule; and
if the community attribute included in the BGP routing entry conforms to a locally preset intra-subnet community attribute sending rule, the data exchange system of the first subnet sends the BGP routing entry to a node server of the first subnet.

Further, a data exchange system includes at least one subnet core switch.

Further, a data exchange system also includes at least one subnet relay switch, and the at least one subnet relay switch establishes a BGP session with each of the plurality of node servers and the subnet core switch.

Further, the method also includes that:
the subject node server periodically sends a state detection message to a node server corresponding to the BGP routing entry; and
if the subject node server does not receive a state response message returned by the node server corresponding to the BGP routing entry, the subject node server deletes the BGP routing entry.

In another aspect, a cloud network transmission routing system is provided. The system is applied to a BGP network. The BGP network may be divided into multiple subnets. Each subnet includes a data exchange subsystem and a plurality of node servers. The data exchange subsystem establishes a BGP session with each of the plurality of node servers. The system includes:
a data exchange subsystem of a first subnet configured to receive an updated BGP routing entry announced by a subject node server, and send the BGP routing entry to a core switch of the second subnet according to the community attribute included in the BGP routing entry, where the BGP routing entry includes a network segment identifier of a subject network segment of the subject node server and a corresponding community attribute; and
a data exchange subsystem of the second subnet configured to forward the BGP routing entry to a node server of the second subnet.

Further, the data exchange subsystem of the first subnet is specifically configured to:
determine whether the community attribute included in the BGP routing entry conforms to a locally preset intra-subnet community attribute accepting rule; and
if the community attribute included in the BGP routing entry conforms to the locally preset intra-subnet community attribute accepting rule, accept the updated BGP routing entry announced by the subject node server.

Further, the data exchange subsystem of the first subnet is specifically configured to:
determine a target inter-subnet community attribute sending rule, in the locally preset inter-subnet community attribute sending rule table, to which the community attribute included in the BGP routing entry conforms; and
determine a second subnet pointed to by the target inter-subnet community attribute sending rule, and send the BGP routing entry to the data exchange subsystem of the second subnet.

Further, the data exchange subsystem of the second subnet is specifically configured to:
determine whether the community attribute included in the BGP routing entry conforms to a locally preset intra-subnet community attribute sending rule; and
if the community attribute included in the BGP routing entry conforms to a locally preset intra-subnet community attribute sending rule, forward the BGP routing entry to the node server of the second subnet.

Further, the data exchange subsystem of the second subnet is specifically configured to:
determine whether the community attribute included in the BGP routing entry conforms to a preset inter-subnet community attribute accepting rule in a locally preset inter-subnet community attribute accepting rule table; and
if the community attribute included in the BGP routing entry conforms to a preset inter-subnet community attribute accepting rule in the locally preset inter-subnet community attribute accepting rule table, send the BGP routing entry to the node server of the second subnet.

Further, the data exchange subsystem of the first subnet is also configured to:
determine whether the community attribute included in the BGP routing entry conforms to a locally preset intra-subnet community attribute sending rule; and
if the community attribute included in the BGP routing entry conforms to a locally preset intra-subnet community attribute sending rule, send the BGP routing entry to a node server of the first subnet.

Further, a data exchange subsystem includes at least one subnet core switch.

Further, a data exchange subsystem also includes at least one subnet relay switch, where the at least one subnet relay switch establishes a BGP session with each of the plurality node servers and the at least one subnet core switch.

Further, the node server is also configured to:
periodically send a state detection message to a node server corresponding to the BGP routing entry; and
delete the BGP routing entry if a state response message returned by the node server corresponding to the BGP routing entry is not received.

The beneficial effects brought by the technical solutions provided by the embodiments of the present disclosure include the following.

In the embodiments of the present disclosure, the data exchange system of the first subnet receives an updated BGP routing entry announced by a subject node server, where the BGP routing entry includes the network segment identifier of a subject network segment of the subject node server and the corresponding community attribute. The data exchange system of the first subnet sends the BGP routing entry to the data exchange system of the second subnet according to the community attribute included in the BGP routing entry. The data exchange system of the second subnet forwards the BGP routing entry to a node server of the second subnet. In this way, a node server that is able to receive the BGP routing entry may be determined according to the community attribute, so that the BGP routing entry may be received only by a designated node server. This reduces the traffic consumption during the transmission of the BGP routing entry, and prevents the BGP routing entry from being received by other node servers, thereby improving security.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a cloud network transmission routing method according to an embodiment of the present disclosure; and
FIG. 2 is a schematic structural diagram of a cloud network transmission routing system according to an embodiment of the present disclosure.

### DETAILED DESCRIPTION

To make the objective, technical solutions, and advantages of the present disclosure clearer, embodiments of the present disclosure will be made in detail hereinafter with reference to the accompanying drawings.

Embodiments of the present disclosure provide a cloud network transmission routing method. This method may be applied to a BGP (Border Gateway Protocol) network, and is implemented by data exchange systems and node servers in the BGP network. A data exchange system may be configured to include at least one core switch, or include at least one core switch and at least one relay switch. In the BGP network, a data exchange system and a node server establish a BGP session, and a core switch and a relay switch in the data exchange system also establish a BGP session. A node server may use its own network segment as a BGP routing entry and send it to another node server in the BGP network through the data exchange system, so that the two node servers may route data packets. One application scenario of the disclosed embodiments may include: an administrator sets a subject network segment of a subject node server as a BGP routing entry on a node server of the first subnet, where the BGP routing entry includes a network segment identifier of the subject network segment and a corresponding community attribute. The subject node server announces the BGP routing entry to the outside. After receiving the BGP routing entry, the data exchange system of the first subnet sends the BGP routing entry to the data exchange system of a second subnet according to the community attribute included in the BGP routing entry. The data exchange system of the second subnet forwards the BGP routing entry to a node server of the second subnet.

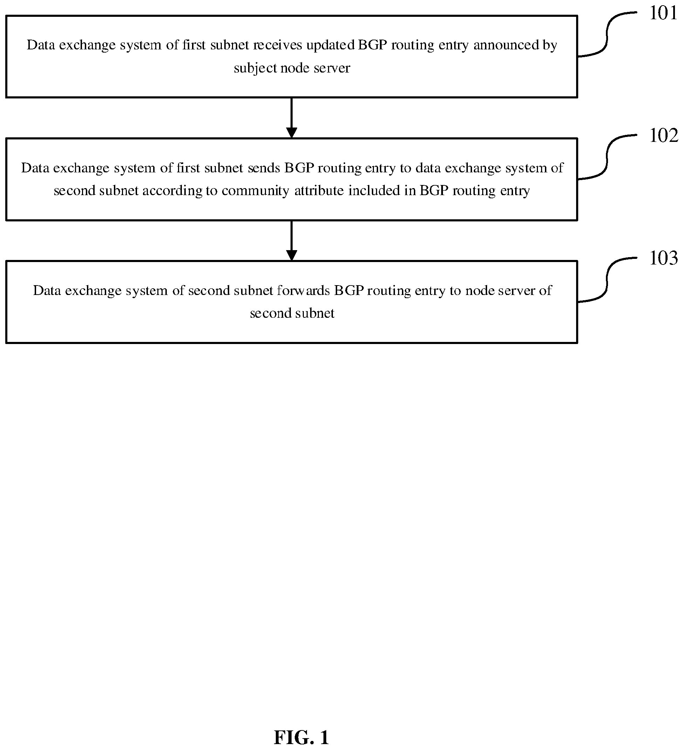

A cloud network routing process shown in FIG. 1 will be made in detail hereinafter in conjunction with specific embodiments, and the content may be as follows:
Step 101: The data exchange system of the first subnet receives the updated BGP routing entry announced by the subject node server.

Here, the BGP routing entry includes the network segment identifier of the subject network segment of the subject node server and the corresponding community attribute.

In one implementation, a BGP session is established between a node server and a data exchange system, and a BGP network is formed by node servers and data exchange systems. More than one subnet may be configured in a BGP network. Each subnet contains a data exchange system and multiple node servers. BGP sessions are also established between data exchange systems in different subnets. Different subnets exchange data through BGP sessions established between the data exchange systems of the respective subnets.

After an administrator updates a BGP routing entry of the subject node server on the subject node server in the first subnet, the subject node server may announce the updated BGP routing entry to the outside. The BGP routing entry contains the network segment identifier of the subject network segment of the subject node server and the corresponding community attribute. The updated BGP routing entry announced by the subject node server may be received by the data exchange system of the first subnet. The process of updating a BGP routing entry includes: adding a BGP routing entry for a new network segment, deleting a BGP routing entry for an existing network segment, adding a community attribute corresponding to a network segment in an existing BGP routing entry, deleting a community attribute corresponding to a network segment in an existing BGP routing entry, or modifying a community attribute corresponding to a network segment in an existing BGP routing entry, etc. It may be understood that the subject node server may generally use an update message to announce an updated BGP routing entry, where the update message has different fields to identify the corresponding update operations.

Multiple BGP routing entries on the subject node server may form a BGP routing table, as shown in Table 1. The community attribute is in an AA:NN format, where AA represents the source subnet of a node server to which the BGP routing entry belongs, and NN represents the target subnet to which the BGP routing entry may be sent. Taking Table 1 as an example, 100 represents the Hangzhou subnet, 200 represents the Shenzhen subnet, and 300 represents the Beijing subnet. According to Table 1, it may be seen that the subject node server has two network segments 11.0.0.0/24 and 11.0.1.0/24. According to the different network segments, there are two BGP routing entries. BGP routing entry 11 indicates that the network segment ID of the BGP routing entry is 11.0.0.0/24, with two community attributes of 100:200, 100:300. The source subnet of the node server to which the BGP routing entry 11 belongs is the Hangzhou subnet. The BGP routing entry may be sent to a node server in the Shenzhen subnet or a node server in the Beijing subnet. BGP routing entry 12 indicates that the network segment ID of the BGP routing entry is 11.0.1.0/24, with three community attributes of 100:100, 100:200, and 100:300. The source subnet of the node server to which the BGP routing entry 12 belongs is the Hangzhou subnet. The BGP routing entry 12 may be sent to another node server in the Hangzhou subnet, a node server in the Shenzhen subnet, or a node server in the Beijing subnet.

**Table 1 - BGP Routing Table 1**

| No. | Segment ID | Community Attribute | Source Subnet-Target Subnet |
|---|---|---|---|
| 11 | 11.0.0.0/24 | 100:200; | Hangzhou-Shenzhen; |
| | | 100:300 | Hangzhou-Beij ing |
| 12 | 11.0.1.0/24 | 100:100; | Hangzhou-Hangzhou; |
| | | 100:200; | Hangzhou-Shenzhen; |
| | | 100:300 | Hangzhou-Beij ing |

The data exchange system of the first subnet may receive some incorrect or unconfigured BGP routing entries due to various reasons. Therefore, the processing of Step 101 may specifically be as follows: the data exchange system of the first subnet determines whether the community attribute included in the BGP routing entry conforms to a locally preset intra-subset community attribute accepting rule; if the community attribute included in the BGP routing entry conforms to the locally preset intra-subset community attribute accepting rule, the data exchange system of the first subnet accepts the updated BGP routing entry announced by the subject node server.

In one implementation, when an administrator sets a BGP routing entry for the subject node server of the first subnet, the subject node server of the first subnet may announce an incorrect or unconfigured BGP routing entry due to an operation error or other reasons. Therefore, on the data exchange system of the first subnet, an intra-subset community attribute accepting rule may be set in advance in the subnet. Only a BGP routing entry with a community attribute conforming to the intra-subset community attribute accepting rule may be accepted by the data exchange system of the first subnet. If the community attribute included in the BGP routing entry does not conform to the intra-subset community attribute accepting rule preset in the data exchange system of the first subnet, the data exchange system of the first subnet discards the BGP routing entry. After accepting the BGP routing entry, the data exchange system of the first subnet sends the accepted BGP routing entry to the data exchange system of a second subnet. In this way, by setting an intra-subnet community attribute accepting rule on the data exchange system, the BGP routing entries announced by a node server may be screened and filtered by the data exchange system in the same subnet. Only the BGP routing entries pre-planned may be accepted and sent out by the data exchange system, so as to prevent unplanned BGP routing entries from being sent out, thereby improving security.

For example, the intra-subnet community attribute accepting rule on the data exchange system in the Hangzhou subnet may be set to a community attribute of 100:NN. That is, the source subnet of the node server to which a BGP routing entry belongs is the Hangzhou subnet, and the target subnet may be any subnet. The data exchange system of the Hangzhou subnet only accepts a BGP routing entry whose source subnet is the Hangzhou subnet. Referring to Table 1, it may be seen that both the BGP routing entry 11 and the BGP routing entry 12 may be accepted by the data exchange system of the Hangzhou subnet.

The data exchange system of the first subnet is further preset with an intra-subnet community attribute sending rule. After accepting a BGP routing entry sent by the data exchange systems of other subnets, the data exchange system of the first subnet may further determine whether the community attribute of the BGP routing entry conforms to the locally preset intra-subnet community attribute sending rule in the data exchange system of the first subnet. If the received community attribute of the BGP routing entry conforms to the locally preset intra-subnet community attribute sending rule, the data exchange system of the first subnet may forward the BGP routing entry to each node server connected to the data exchange system in the first subnet.

For example, the intra-subnet community attribute sending rule in the data exchange system in the Hangzhou subnet may be set to a community attribute of AA:100. That is, the source subnet of the node server to which a BGP routing entry belongs may be any subnet, and the target subnet is the Hangzhou subnet. The data exchange system of the Hangzhou subnet may only send a BGP routing entry with the target subnet as the Hangzhou subnet to the node servers in the Hangzhou subnet. As shown in Table 2, two community attributes of the BGP routing entry 21 are: 200:200 and 200:300, respectively. That is, the source subnet of the BGP routing entry 21 is the Shenzhen subnet, and the target subnets are the Shenzhen subnet and the Beijing subnet. The two community attributes of the BGP routing entry 22 are: 200:200 and 200:100, respectively. That is, the source subnet of the BGP routing entry 22 is the Shenzhen subnet, and the target subnets are the Shenzhen subnet and the Hangzhou subnet, respectively. When the BGP routing entry 21 and BGP routing entry 22 are received by the data exchange system of the Hangzhou subnet, because the community attributes included in the BGP routing entry 21 do not conform to the above intra-subnet community attribute sending rule in the Hangzhou subnet, the data exchange system of the Hangzhou subnet cannot forward the BGP routing entry 21 to all the node servers in the Hangzhou subnet that are connected to the data exchange system of the Hangzhou subnet. One community attribute included in the BGP routing entry 22 conforms to the above intra-subnet community attribute sending rule in the Hangzhou subnet. Therefore, the data exchange system of the Hangzhou subnet may forward the BGP routing entry 22 to all the node servers of the Hangzhou subnet that are connected to the data exchange system of the Hangzhou subnet. In this way, by setting an intra-subnet community attribute sending rule on the data exchange system, the data exchange system may screen and filter the BGP routing entries received from other subnets. Only the pre-planned BGP routing entries may be sent by the data exchange system to the node servers in the same subnet, so as to prevent unplanned BGP routing entries from being learned by the node servers in the same subnet, thereby improving security.

**Table 2 - BGP Routing Table 2**

| No. | Segment ID | Community Attribute | Source Subnet-Target Subnet |
|---|---|---|---|
| 21 | 21.0.0.0/24 | 200:200; 200:300 | Shenzhen-Shenzhen; Shenzhen-Beijing |
| 22 | 21.0.1.0/24 | 200:200; 200:100 | Shenzhen-Shenzhen; Shenzhen-Hangzhou |

Step 102: The data exchange system of the first subnet sends the BGP routing entry to the data exchange system of the second subnet according to the community attribute included in the BGP routing entry.

In one implementation, after accepting the BGP routing entry sent from the node server of the first subnet, the data exchange system of the first subnet adds the accepted BGP routing entry to the local BGP routing table of the data exchange system of the first subnet, and then sends the BGP routing entry to the data exchange system of the second subnet according to the community attribute included in the BGP routing entry.

In order to prevent the data exchange system of the first subnet from sending the received BGP routing entry to an incorrect subnet, the processing of Step 102 may be specifically as follows: the data exchange system of the first subnet determines, from the locally preset inter-subnet community attribute sending rule table, a target inter-subnet community attribute sending rule to which the community attribute included in the BGP routing entry conforms; and the data exchange system of the first subnet determines a second subnet pointed to by the target inter-subnet community attribute sending rule, and sends the BGP routing entry to the data exchange system of the second subnet.

In one implementation, the data exchange system of the first subnet is preset with an inter-subnet community attribute sending rule table, and multiple inter-subnet community attribute sending rules are recorded in the table. Each inter-subnet community attribute sending rule is applied to a corresponding BGP session (i.e., a BGP session between the data exchange system of the first subnet and the data exchange system of another subnet). After accepting the BGP routing entry sent from the node server of the first subnet, the data exchange system of the first subnet updates the local BGP routing table of the data exchange system of the first subnet. Next, according to the community attribute of the BGP routing entry, the data exchange system of the first subnet determines a target inter-subnet community attribute sending rule from the inter-subnet community attribute sending rule table. The data exchange system of the first subnet further determines a second subnet pointed to by the BGP session corresponding to the target inter-subnet community attribute sending rule, and then sends the BGP routing entry to the data exchange system of the second subnet through the BGP session.

For example, an inter-subnet community attribute sending rule: community 100:200 may be set in the inter-subnet community attribute sending rule table on the data exchange system of the Hangzhou subnet. That is, the source subnet of the node server to which the BGP routing entry belongs is the Hangzhou subnet, and the target subnet is the Shenzhen subnet. The inter-subnet community attribute sending rule is applied to the Hangzhou-Shenzhen BGP sessions (i.e., the BGP sessions between the data exchange system of the Hangzhou subnet and the data exchange system of the Shenzhen subnet). Referring to Table 1, when the data exchange system of the Hangzhou subnet receives the BGP routing entry 11 and the BGP routing entry 12, the community attributes included in the BGP routing entry 11 and the BGP routing entry 12 conform to the foregoing inter-subnet community attribute sending rule applied to the Hangzhou-Shenzhen BGP sessions. At this moment, the data exchange system of the Hangzhou subnet further determines the Shenzhen subnet pointed to by the Hangzhou-Shenzhen BGP sessions corresponding to the foregoing inter-subnet community attribute sending rule, and then sends the BGP routing entry 11 and the BGP routing entry 12 to the data exchange system of the Shenzhen subnet through the Hangzhou-Shenzhen BGP sessions. For the other BGP sessions on the data exchange system of the Hangzhou subnet, because these BGP sessions do not have a corresponding inter-subnet community attribute sending rule: community 100:200, the BGP routing entry 11 and the BGP routing entry 12 will be directly discarded on these BGP sessions. In this way, by setting an inter-subnet community attribute sending rule on a data exchange system, the data exchange system may screen and filter the BGP routing entries received from the node servers in the same subnet. Only the pre-planned BGP routing entries may be sent by the data exchange system to the data exchange systems of the corresponding subnets to prevent unplanned BGP routing entries from being sent to incorrect subnets, thereby improving security.

Step 103: The data exchange system of the second subnet forwards the BGP routing entry to a node server of the second subnet.

In one implementation, after receiving the BGP routing entry sent by the data exchange system of the first subnet, the data exchange system of the second subnet sends the BGP routing entry to a node server of the second subnet.

In order to prevent the data exchange system of the second subnet from sending the received incorrect or unplanned BGP routing entries, the processing in Step 103 may be specifically as follows: the data exchange system of the second subnet determines whether the community attribute included in the BGP routing entry conforms to an inter-subnet community attribute accepting rule in the locally preset inter-subnet community attribute accepting rule table; if the community attribute included in the BGP routing entry conforms to the inter-subnet community attribute accepting rule, the data exchange system of the second subnet sends the BGP routing entry to the node server of the second subnet.

In one implementation, the data exchange system of the second subnet may be connected to the data exchange systems of multiple subnets. Therefore, the data exchange system of the second subnet may receive BGP routing entries from the data exchange systems of different subnets. Among these BGP routing entries, there may be some incorrect or unplanned BGP routing entries due to human error or other reasons. Therefore, an inter-subnet community attribute accepting rule table may be set in advance on the data exchange system of the second subnet. Multiple inter-subnet community attribute accepting rules are recorded in the table. Each inter-subnet community attribute accepting rule is applied to a corresponding BGP session (i.e., a BGP session between the data exchange system of the second subnet and the data exchange system of another subnet). The data exchange system of the second subnet may accept a BGP routing entry received by the data exchange system of the second subnet only when the community attribute of the BGP routing entry conforms to a certain inter-subnet community attribute accepting rule in the table.

After receiving the BGP routing entry sent by the data exchange system of the first subnet, the data exchange system of the second subnet determines whether the community attribute included in the BGP routing entry conforms to any one of the inter-subnet community attribute accepting rules in the locally preset inter-subnet community attribute accepting rule table. If the community attribute included in the BGP routing entry conforms to an inter-subnet community attribute accepting rule, the data exchange system of the second subnet accepts the BGP routing entry through a BGP session corresponding to the inter-subnet community attribute accepting rule, and then sends the BGP routing entry to the node servers of the second subnet. If the community attribute included in the BGP routing entry does not conform to any inter-subnet community attribute accepting rule, the data exchange system of the second subnet discards the BGP routing entry.

For example, an inter-subnet community attribute accepting rule: community 100:200 may be set in the inter-subnet community attribute accepting rule table on the data exchange system of the Shenzhen subnet. That is, the source subnet of the node server to which the BGP routing entry belongs is the Hangzhou subnet, and the target network subnet is the Shenzhen subnet. The inter-subnet community attribute accepting rule is applied to the Hangzhou-Shenzhen BGP sessions. Referring to Table 1, when the data exchange system of the Shenzhen subnet receives the BGP routing entry 11 and BGP routing entry 12, if the BGP routing entry 11 and BGP routing entry 12 come from the Hangzhou-Shenzhen BGP sessions, the community attributes included in the BGP routing entry 11 and the BGP routing entry 12 conform to the aforementioned inter-subnet community attribute accepting rule. At this moment, the data exchange system of the Shenzhen subnet accepts the BGP routing entry 11 and BGP routing entry 12 and forwards them to the data exchange system of the Shenzhen subnet. For the other BGP sessions on the data exchange system of the Shenzhen subnet, because these BGP sessions do not have the corresponding inter-subnet community attribute accepting rule: community 100:200, if the BGP routing entry 11 and BGP routing entry 12 come from these BGP sessions, because the locally preset inter-subnet community attribute accepting rule table does not have an applicable inter-subnet community attribute accepting rule, the BGP routing entry 11 and BGP routing entry 12 will be directly discarded. In this way, by setting an inter-subnet community attribute accepting rule on the data exchange system, the data exchange system may screen and filter BGP routing entries received from other subnets. Only the pre-planned BGP routing entries may be accepted by the data exchange system. This prevents the data exchange system from sending unplanned BGP routing entries to the node servers in the same subnet, thereby improving security.

The data exchange system of the second subnet may receive some incorrect or unplanned BGP routing entries due to various reasons. Therefore, in order to prevent the incorrect and unplanned BGP routing entries from being sent to the node servers of the second subnet and prevent the node servers of the second subnet from receiving the incorrect BGP or unplanned routing entries, the processing in Step 103 may be as follows: the data exchange system of the second subnet determines whether the community attribute included in the BGP routing entry conforms to a locally preset intra-subnet community attribute sending rule; if the community attribute included in the BGP routing entry conforms to the locally preset intra-subnet community attribute sending rule, the data exchange system of the second subnet forwards the BGP routing entry to the node servers of the second subnet.

In one implementation, the data exchange system of the second subnet is preset with an intra-subnet community attribute sending rule. After receiving the BGP routing entry sent by the data exchange system of the first subnet, the data exchange system of the second subnet may further determine whether the community attribute of the BGP routing entry conforms to the locally preset intra-subnet community attribute sending rule. If the community attribute of the BGP routing entry conforms to the locally preset intra-subnet community attribute sending rule, the data exchange system of the second subnet forwards the BGP routing entry to all the node servers connected to the data exchange system in the second subnet.

For example, an intra-subnet community attribute sending rule in the data exchange system of the Shenzhen subnet may be set to a community attribute of AA:200. That is, the source subnet of the node server to which a BGP routing entry belongs may be any subnet, and the target subnet is the Shenzhen subnet. The data exchange system of the Shenzhen subnet may only send the BGP routing entries with the target subnet as the Shenzhen subnet to the node servers of the Shenzhen subnet. Referring to Table 1, when the data exchange system of the Shenzhen subnet receives the BGP routing entry 11 and the BGP routing entry 12, the community attributes included in the BGP routing entry 11 and the BGP routing entry 12 conform to the foregoing intra-subnet community attribute sending rule. Accordingly, the data exchange system of the Shenzhen subnet may send the BGP routing entry 11 and the BGP routing entry 12 to the node servers of the Shenzhen subnet.

After the data exchange system of the first subnet receives a BGP routing entry sent from a node server of the first subnet, if the target subnet of the BGP routing entry is also the first subnet, the data exchange system of the first subnet may directly process the BGP routing entry. The corresponding processing may be specifically as follows: the data exchange system of the first subnet determines whether the community attribute included in the BGP routing entry conforms to a locally preset intra-subnet community attribute sending rule; if the community attribute included in the BGP routing entry conforms to the locally preset intra-subnet community attribute sending rule, the data exchange system of the first subnet sends the BGP routing entry to the node servers of the first subnet.

In one implementation, the BGP routing entries received by the data exchange system of the first subnet may originate from the node servers of the first subnet, or may originate from data exchange systems of other subnets. The processing of BGP routing entries originated from the data exchange systems of other subnets has been described previously, and will not be repeated again here. The processing of the BGP routing entries originated from the node servers of the first subnet will be described here. As described earlier, the data exchange system of the first subnet is also preset with an intra-subnet community attribute sending rule. After receiving a BGP routing entry from a node server of the first subnet, the data exchange system of the first subnet may further determine whether the community attribute of the BGP routing entry conforms to the locally preset intra-subnet community attribute sending rule in the data exchange system of the first subnet. If the community attribute of the BGP routing entry conforms to the intra-subnet community attribute sending rule, the data exchange system of the first subnet may forward the BGP routing entry to all the node servers connected to the data change system in the first subnet.

For example, on the data exchange system of the Hangzhou subnet, the intra-subnet community attribute sending rule may be set to a community attribute of 100:100. That is, the source subnet of the node server to which a BGP routing entry belongs is the Hangzhou subnet, and the target subnet is also the Hangzhou subnet. The data exchange system of the Hangzhou subnet may send a BGP routing entry received from a node server of the Hangzhou subnet to another node server of the Hangzhou subnet. Referring to Table 1, it may be seen that when the data exchange system of the Hangzhou subnet receives the BGP routing entry 11 and the BGP routing entry 12, the community attributes included in BGP routing entry 11 do not conform to the foregoing intra-subnet community attribute sending rule. Therefore, the data exchange system of the Hangzhou subnet cannot send the BGP routing entry 11 to the node servers of the Hangzhou subnet. One community attribute included in the BGP routing entry 12 conforms to the foregoing intra-subnet community attribute sending rule. Accordingly, the data exchange system of the Hangzhou subnet may directly forward the BGP routing entry 12 to all the node servers in the Hangzhou subnet that are connected to the data exchange system of the Hangzhou subnet. In this way, by setting an intra-subnet community attribute sending rule on the data exchange system, the data exchange system may screen and filter the BGP routing entries received from the node servers in the same subnet. Only the pre-planned BGP routing entries may be sent by the data exchange system to the other node servers in the same subnet, to prevent unplanned BGP routing entries from being learned by the other node servers in the same subnet, thereby improving security.

In the implementation of the foregoing methods, the data exchange system of each subnet may comprise at least one subnet core switch. In the above methods, the intra-subnet community attribute accepting rule, the inter-subnet community attribute sending rule table, the inter-subnet community attribute accepting rule table, and the intra-subnet community attribute sending rule preset on the data exchange system are set in a subnet core switch of the corresponding subnet.

In the implementation of the foregoing methods, the data exchange system of each subnet may comprise at least one subnet core switch and at least one subnet relay switch. Within the same subnet, a subnet core switch establishes a BGP session with a subnet relay switch, and a subnet relay switch establishes a BGP session with each node server. Between different subnets, BGP sessions are established between subnet core switches in each subnet. The intra-subnet community attribute accepting rule and the intra-subnet community attribute sending rule are set on a subnet relay switch of the corresponding subnet, and the inter-subnet community attribute sending rule table and the inter-subnet community attribute accepting rule table are set on the subnet core switch of the corresponding subnet.

Accordingly, the transmission process of a BGP routing entry in the foregoing methods may be: a subnet relay switch of the first subnet accepts an updated BGP routing entry announced by a node server of the first subnet according to a locally preset intra-subnet community attribute accepting rule, and then sends the accepted BGP routing entry to the subnet core switch of the first subnet; the core switch of the first subnet sends the BGP routing entry to the core switch of the second subnet according to a locally preset inter-subnet community attribute sending rule table; the core switch of the second subnet accepts the BGP routing entry sent by the subnet core switch of the first subnet according to a locally preset inter-subnet community attribute accepting rule table, and sends the BGP routing entry to a subnet relay switch in the second subnet; based on a locally preset intra-subnet community attribute sending rule, the relay switch in the second subnet sends the received BGP routing entry to the node servers in the second subnet. The specific processing of the transmission process is similar to the earlier description, and is not repeated again here.

In order to avoid a condition in which, after a route is established between nodes, the wire fails but the route still exists, causing data to be discarded when the data is sent through the route, the corresponding processing may be as follows: the subject node server periodically sends a state detection message to a node server corresponding to the received BGP routing entry; if the subject node server does not receive a state response message returned by the node server corresponding to the BGP routing entry, the subject node server deletes the BGP routing entry.

In one implementation, BFD (Bidirectional Forwarding Detection) may also be used to detect a wire between the node servers that establish a routing relationship. During the detection, the subject node server may periodically send a BFD control message (e.g., a state detection message) to a node server corresponding to the received BGP routing entry. If the subject node server does not receive the BFD control message (e.g., a state response message) returned by the node server corresponding to the BGP routing entry within a set time period, the subject node server will resend the BFD control message. If the BFD control message returned by the node server corresponding to the BGP routing entry is not received after repeatedly sending the message, it indicates that the wire from the subject node server to the node server corresponding to the BGP routing entry has a problem. At this moment, the subject node server deletes the BGP routing entry from the local BGP routing table.

In the embodiments of the present disclosure, the data exchange system of the first subnet receives an updated BGP routing entry announced by a subject node server, where the BGP routing entry includes the network segment identifier of a subject network segment of the subject node server and the corresponding community attribute. The data exchange system of the first subnet sends the BGP routing entry to the data exchange system of the second subnet according to the community attribute included in the BGP routing entry. The data exchange system of the second subnet forwards the BGP routing entry to a node server of the second subnet. In this way, a node server that is able to receive the BGP routing entry may be determined according to the community attribute, so that the BGP routing entry may be received only by the designated node server. This reduces the traffic consumption during the transmission of the BGP routing entry, and prevents the BGP routing entry from being received by other node servers, thereby improving security.

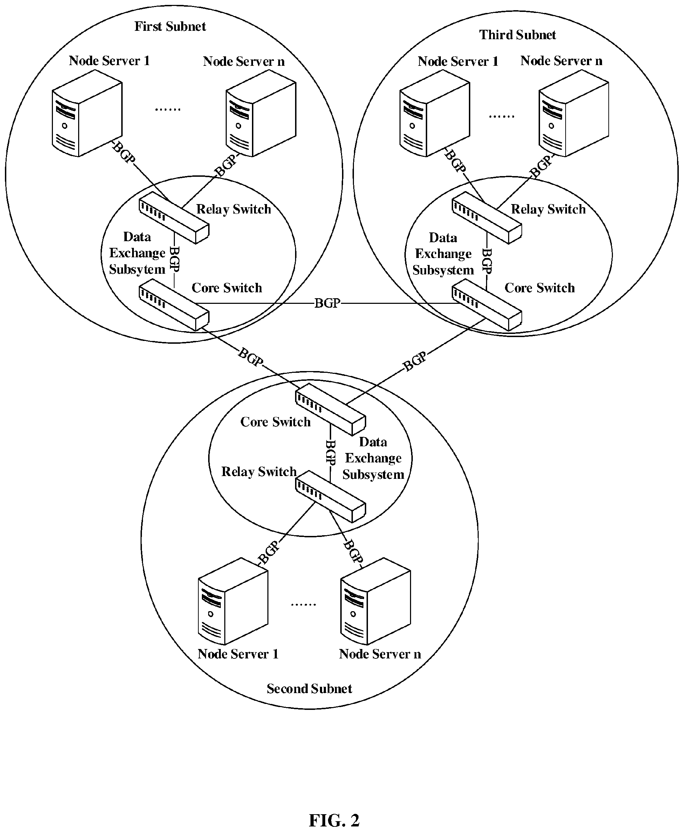

Based on the similar technical concept, embodiments of the present disclosure further provide a cloud network transmission routing system. As shown in FIG. 2, the system is applied to a BGP network. The BGP network may be divided into multiple subnets, and each subnet includes a data exchange subsystem and a plurality of node servers. The data exchange subsystem establishes a BGP session with each of the plurality node servers. The system includes:
a data exchange subsystem of a first subnet configured to receive an updated BGP routing entry announced by a subject node server, and send the BGP routing entry to a data exchange subsystem of a second subnet according to the community attribute included in the BGP routing entry, where the BGP routing entry includes a network segment identifier of a subject network segment of the subject node server and a corresponding community attribute; and
the data exchange subsystem of the second subnet configured to forward the BGP routing entry to a node server of the second subnet.

Optionally, the data exchange subsystem of the first subnet is specifically configured to:
determine whether the community attribute included in the BGP routing entry conforms to a locally preset intra-subnet community attribute accepting rule; and
if the community attribute included in the BGP routing entry conforms to the locally preset intra-subnet community attribute accepting rule, accept the updated BGP routing entry announced by the subject node server.

Optionally, the data exchange subsystem of the first subnet is specifically configured to:
determine a target inter-subnet community attribute sending rule, in the locally preset inter-subnet community attribute sending rule table, to which the community attribute included in the BGP routing entry conforms; and
determine a second subnet pointed to by the target inter-subnet community attribute sending rule, and send the BGP routing entry to the data exchange subsystem of the second subnet.

Optionally, the data exchange subsystem of the second subnet is specifically configured to:
determine whether the community attribute included in the BGP routing entry conforms to a locally preset intra-subnet community attribute sending rule; and
if the community attribute included in the BGP routing entry conforms to the locally preset intra-subnet community attribute sending rule, forward the BGP routing entry to the node server of the second subnet.

Optionally, the data exchange subsystem of the second subnet is specifically configured to:
determine whether the community attribute included in the BGP routing entry conforms to an inter-subnet community attribute accepting rule in a locally preset inter-subnet community attribute accepting rule table; and
if the community attribute included in the BGP routing entry conforms to an inter-subnet community attribute accepting rule in the locally preset inter-subnet community attribute accepting rule table, send the BGP routing entry to the node server of the second subnet.

Optionally, the data exchange subsystem of the first subnet is further configured to:
determine whether the community attribute included in the BGP routing entry conforms to a locally preset intra-subnet community attribute sending rule; and
if the community attribute included in the BGP routing entry conforms to the locally preset intra-subnet community attribute sending rule, send the BGP routing entry to a node server of the first subnet.

Optionally, a data exchange subsystem includes at least one subnet core switch.

Optionally, a data exchange subsystem further includes at least one subnet relay switch, where the at least one subnet relay switch establishes a BGP session with each of the plurality node servers and the at least one subnet core switch.

Optionally, the node server is further configured to:
periodically send a state detection message to a node server corresponding to the BGP routing entry; and
delete the BGP routing entry if a state response message returned by the node server corresponding to the BGP routing entry is not received.

It should be noted that the cloud network transmission routing system provided by the foregoing embodiments has a similar concept as the cloud network transmission routing method embodiments. For specific implementation processes of the system embodiments, refer to the method embodiments, details of which are not described again here.

Through the description of the above embodiments, those skilled in the art may clearly understand that the various embodiments may be implemented by means of software plus a necessary general hardware platform, and of course, may also be implemented by hardware. Based on such understanding, the above-described technical solutions may be embodied in the form of software products in essence or in the form of software products, which may be stored in a computer-readable storage medium such as ROM/RAM, magnetic discs, optical discs, etc., and include a series of instructions for causing a computer device (which may be a personal computer, server, or network device, etc.) to perform the methods described in various embodiments or portions of the embodiments.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A cloud network transmission routing method applied to a BGP network, wherein the BGP network is divided into a plurality of subnets, each subnet includes a data exchange system and a plurality of node servers, and the data exchange system establishes a BGP session with each of the plurality of node servers, and the method comprises:
receiving, by a data exchange system of a first subnet, an updated BGP routing entry announced by a subject node server, wherein the BGP routing entry includes a network segment identifier of a subject network segment of the subject node server and a corresponding community attribute;
sending, by the data exchange system of the first subnet, the BGP routing entry to a data exchange system of a second subnet according to the community attribute included in the BGP routing entry; and
forwarding, by the data exchange system of the second subnet, the BGP routing entry to a node server of the second subnet.

2. The method according to claim 1, wherein receiving, by the data exchange system of the first subnet, the updated BGP routing entry announced by the subject node server further includes:
determining, by the data exchange system of the first subnet, whether the community attribute included in the BGP routing entry conforms to a locally preset intra-subnet community attribute accepting rule; and
if the community attribute included in the BGP routing entry conforms to the locally preset intra-subnet community attribute accepting rule, accepting, by the data exchange system of the first subnet, the updated BGP routing entry announced by the subject node server.

3. The method according to claim 1, wherein sending, by the data exchange system of the first subnet, the BGP routing entry to the data exchange system of the second subnet according to the community attribute included in the BGP routing entry further includes:
determining, by the data exchange system of the first subnet, a target inter-subnet community attribute sending rule, in a locally preset inter-subnet community attribute sending rule table, to which the community attribute included in the BGP routing entry conforms; and
determining, by the data exchange system of the first subnet, a second subnet pointed to by the target inter-subnet community attribute sending rule, and sending, by the data exchange system of the first subnet, the BGP routing entry to the data exchange system of the second subnet.

4. The method according to claim 1, wherein forwarding, by the data exchange system of the second subnet, the BGP routing entry to a node server of the second subnet further includes:
determining, by the data exchange system of the second subnet, whether the community attribute included in the BGP routing entry conforms to a locally preset intra-subnet community attribute sending rule; and
if the community attribute included in the BGP routing entry conforms to the locally preset intra-subnet community attribute sending rule, forwarding, by the data exchange system of the second subnet, the BGP routing entry to the node server of the second subnet.

5. The method according to claim 1, wherein forwarding, by the data exchange system of the second subnet, the BGP routing entry to a node server of the second subnet further includes:
determining, by the data exchange system of the second subnet, whether the community attribute included in the BGP routing entry conforms to an inter-subnet community attribute accepting rule in a locally preset inter-subnet community attribute accepting rule table; and
if the community attribute included in the BGP routing entry conforms to an inter-subnet community attribute accepting rule in the locally preset inter-subnet community attribute accepting rule table, sending, by the data exchange system of the second subnet, the BGP routing entry to the node server of the second subnet.

6. The method according to claim 1, further comprising:
determining, by the data exchange system of the first subnet, whether the community attribute included in the BGP routing entry conforms to a locally preset intra-subnet community attribute sending rule; and
if the community attribute included in the BGP routing entry conforms to the locally preset intra-subnet community attribute sending rule, sending, by the data exchange system of the first subnet, the BGP routing entry to a node server of the first subnet.

7. The method according to any one of claims 1-6, wherein the data exchange system includes at least one subnet core switch.

8. The method according to claim 7, wherein the data exchange system further includes at least one subnet relay switch, and the at least one subnet relay switch establishes a BGP session with each of the plurality node servers and the at least one subnet core switch.

9. The method according to claim 1, further comprising:
periodically sending, by the subject node server, a state detection message to a node server corresponding to the BGP routing entry; and
if the subject node server does not receive a state response message returned by the node server corresponding to the BGP routing entry, deleting the BGP routing entry by the subject node server.

10. A cloud network transmission routing system applied to a BGP network, wherein the BGP network is divided into a plurality of subnets, each subnet includes a data exchange subsystem and a plurality of node servers, and the data exchange subsystem establishes a BGP session with each of the plurality node servers, and the system includes:
a data exchange subsystem of a first subnet configured to receive an updated BGP routing entry announced by a subject node server, and send the BGP routing entry to a data exchange subsystem of a second subnet according to a community attribute included in the BGP routing entry, wherein the BGP routing entry includes a network segment identifier of a subject network segment of the subject node server and a corresponding community attribute; and
the data exchange subsystem of the second subnet configured to forward the BGP routing entry to a node server of the second subnet.

11. The system according to claim 10, wherein the data exchange subsystem of the first subnet is further configured to:
determine whether the community attribute included in the BGP routing entry conforms to a locally preset intra-subnet community attribute accepting rule; and
if the community attribute included in the BGP routing entry conforms to a locally preset intra-subnet community attribute accepting rule, accept the updated BGP routing entry announced by the subject node server.

12. The system according to claim 10, wherein the data exchange subsystem of the first subnet is further configured to:
determine a target inter-subnet community attribute sending rule, in a locally preset inter-subnet community attribute sending rule table, to which the community attribute included in the BGP routing entry comforts; and
determine a second subnet pointed to by the target inter-subnet community attribute sending rule, and send the BGP routing entry to the data exchange subsystem of the second subnet.

13. The system according to claim 10, wherein the data exchange subsystem of the second subnet is further configured to:
determine whether the community attribute included in the BGP routing entry conforms to a locally preset intra-subnet community attribute sending rule; and
if the community attribute included in the BGP routing entry conforms to the locally preset intra-subnet community attribute sending rule, forward the BGP routing entry to the node server of the second subnet.

14. The system according to claim 10, wherein the data exchange subsystem of the second subnet is further configured to:
determine whether the community attribute included in the BGP routing entry conforms to an inter-subnet community attribute accepting rule in a locally preset inter-subnet community attribute accepting rule table; and
if the community attribute included in the BGP routing entry conforms to an inter-subnet community attribute accepting rule in the locally preset inter-subnet community attribute accepting rule table, send the BGP routing entry to the node server of the second subnet.

15. The system according to claim 10, wherein the data exchange subsystem of the first subnet is further configured to:
determine whether the community attribute included in the BGP routing entry conforms to a locally preset intra-subnet community attribute sending rule; and
if the community attribute included in the BGP routing entry conforms to the locally preset intra-subnet community attribute sending rule, send the BGP routing entry to a node server of the first subnet.

16. The system according to any one of claims 10-15, wherein the data exchange subsystem includes at least one subnet core switch.

17. The system according to claim 16, wherein the data exchange subsystem further includes at least one subnet relay switch, and the at least one subnet relay switch establishes a BGP session with each of the plurality node servers and the at least one subnet core switch.

18. The system according to claim 10, wherein the subject node server is further configured to:
periodically send a state detection message to a node server corresponding to the BGP routing entry; and
if a state response message returned by the node server corresponding to the BGP routing entry is not received, delete the BGP routing entry.
